Europäisches Patentamt

European Patent Office

Office européen des brevets

(11) Numéro de publication : **0 475 799 A1**

# (12) DEMANDE DE BREVET EUROPEEN

(21) Numéro de dépôt : **91402181.1**

(22) Date de dépôt : **02.08.91**

(51) Int. Cl.⁵ : **G21C 1/09, F22B 37/00**

(30) Priorité : **10.09.90 FR 9011185**

(43) Date de publication de la demande :
**18.03.92 Bulletin 92/12**

(84) Etats contractants désignés :
**BE CH DE ES LI SE**

(71) Demandeur : **FRAMATOME**
**Tour Fiat 1, Place de la Coupole**
**F-92400 Courbevoie (FR)**

(72) Inventeur : **Godin, Bruno**
**21 rue Pasteur**
**F-69680 Chassieu (FR)**

(74) Mandataire : **Bouget, Lucien et al**
**Cabinet Lavoix 2, Place d'Estienne d'Orves**
**F-75441 Paris Cédex 09 (FR)**

(54) Procédé et dispositif d'extraction d'une canne chauffante présentant des déformations, d'une enveloppe de pressuriseur d'un réacteur nucléaire à eau sous pression.

㊗ La canne chauffante (3c) est découpée par l'intérieur de l'enveloppe (2) du pressuriseur, dans au moins une zone (18, 19), par une opération de découpage commandée à distance et au moins un tronçon (20a, 20b, 20c) de la canne (3c) est extrait par une ouverture de visite de l'enveloppe (2). L'invention est également relative à des dispositifs de découpage robotisés permettant de réaliser le découpage des cannes chauffantes (3) à l'intérieur de l'enveloppe (2) du pressuriseur (1).

EP 0 475 799 A1

FIG. 2

L'invention concerne un procédé et un dispositif d'extraction d'une canne chauffante présentant des déformations, d'une enveloppe d'un pressuriseur d'un réacteur nucléaire à eau sous pression.

Les réacteurs nucléaires à eau sous pression comportent un circuit primaire dans lequel l'eau de refroidissement du réacteur est maintenue à une forte pression, de l'ordre de 155 bars, grâce à un pressuriseur disposé sur l'une des branches du circuit primaire.

Le pressuriseur permet de maintenir la pression dans le circuit primaire entre certaines limites déterminées, soit par aspersion, lorsque la pression a tendance à dépasser la limite supérieure admise, soit par chauffage électrique du fluide primaire, lorsque la pression a tendance à descendre en-dessous de la valeur inférieure admise. Ces opérations sont effectuées à l'intérieur du pressuriseur qui comporte en particulier une enveloppe ayant un fond bombé par lequel on introduit des cannes de chauffage électrique à l'intérieur du pressuriseur.

Des manchettes de traversées sont fixées par soudage sur le fond du pressuriseur, chacune au niveau d'une ouverture de traversée. Les cannes chauffantes sont introduites dans les manchettes et soudées à leur extrémité de manière à assurer la tenue mécanique et l'étanchéité de la liaison.

Les cannes chauffantes sont réalisées sous la forme de doigts de gant renfermant les résistances de chauffage et comportant une extrémité ouverte au niveau de l'extrémité extérieure de la manchette de traversée, pour assurer le branchement et l'alimentation des résistances électriques.

Certaines cannes chauffantes peuvent devenir défectueuses en service, si bien qu'il est nécessaire de contrôler périodiquement leur bon état de fonctionnement.

Dans le cas où l'on a détecté la présence d'une canne défectueuse, on effectue son remplacement de manière à continuer à assurer un fonctionnement satisfaisant du pressuriseur.

De manière habituelle, le remplacement d'une canne de chauffage d'un pressuriseur est réalisé par une suite d'opérations comportant le tronçonnage de la manchette, l'extraction de la canne défectueuse, le nettoyage et l'usinage de l'extrémité découpée de la manchette, la mise en place d'une canne de remplacement, la fixation provisoire de cette canne sur la manchette par des points de soudure réalisés manuellement et la fixation définitive de la canne par une soudure circulaire continue assurant la jonction entre la canne et l'extrémité de la manchette généralement réalisée par soudage automatique. Différentes opérations de contrôle doivent être effectuées entre les différentes opérations mentionnées ci-dessus qui sont toutes effectuées depuis l'extérieur du pressuriseur, dans une zone située en-dessous du fond bord inférieur de son enveloppe.

L'enveloppe du pressuriseur, de forme générale cylindrique, fermée par des fonds bombés est disposée avec son axe de symétrie dans la direction verticale et les cannes chauffantes sont maintenues dans une disposition verticale, c'est-à-dire parallèles à l'axe de l'enveloppe du pressuriseur, par des plaques-entretoises solidaires de la paroi interne de l'enveloppe.

Le maintien des cannes chauffantes qui présentent une longueur limitée et qui sont disposées dans la partie inférieure de l'enveloppe du pressuriseur est généralement assuré par deux plaques-entretoises, à savoir une plaque-entretoise inférieure située au-dessus du fond du pressuriseur et une plaque-entretoise supérieure située au-dessus de la plaque-entretoise inférieure.

Dans le cas où une canne chauffante à remplacer présente des déformations telles que des bourrelets ou renflements dont le diamètre est supérieur au diamètre des trous de passage des cannes chauffantes dans les plaques-entretoises et à l'alésage des manchettes, il n'est plus possible d'effectuer l'extraction de la canne, depuis l'extérieur de l'enveloppe du pressuriseur, par simple traction axiale sur l'extrémité de la canne chauffante.

De tels renflements de l'enveloppe métallique des cannes chauffantes apparaissent généralement au niveau des plaques-entretoises et au-dessus des manchettes de traversées du fond de l'enveloppe du pressuriseur.

On ne connaissait pas jusqu'ici de procédé et de dispositif permettant d'extraire des cannes chauffantes déformées de l'enveloppe d'un pressuriseur.

Le but de l'invention est donc de proposer un procédé d'extraction d'une canne chauffante présentant des déformations, d'une enveloppe de pressuriseur d'un réacteur nucléaire à eau sous pression ayant un axe de symétrie, dans laquelle les cannes chauffantes sont maintenues dans une direction axiale par des plaques-entretoises et traversent un fond de l'enveloppe, à l'intérieur de manchettes, ce procédé permettant d'effectuer l'extraction de la canne chauffante, pour assurer son remplacement, quelles que soient l'amplitude et la disposition des déformations de la canne.

Dans ce but, la canne chauffante est découpée à l'intérieur de l'enveloppe du pressuriseur, dans au moins une zone, par une opération de découpage commandée à distance et au moins un tronçon de la canne est extrait par une ouverture de visite de l'enveloppe.

L'invention est également relative à un dispositif permettant l'extraction d'une canne chauffante présentant des déformations, de l'enveloppe d'un pressuriseur.

Afin de bien faire comprendre l'invention, on va maintenant décrire à titre d'exemple non limitatif, en se référant aux figures jointes en annexe, plusieurs modes de mise en oeuvre d'un procédé suivant l'invention et plusieurs variantes de réalisation de dispositifs permettant cette mise en oeuvre.

La figure 1 est une vue en perspective éclatée d'un pressuriseur d'un réacteur nucléaire à eau sous pression.

La figure 2 est une demi-vue en coupe par un plan vertical de la partie inférieure d'un pressuriseur comportant des cannes chauffantes à remplacer dont l'une présente une déformation au niveau d'une plaque-entretoise.

La figure 3 est une demi-vue en coupe par un plan vertical de la partie inférieure d'un pressuriseur comportant des cannes chauffantes à remplacer dont l'une présente une déformation au niveau d'une manchette de traversée du fond de l'enveloppe du pressuriseur.

La figure 4 est une demi-vue en coupe par un plan vertical de la partie inférieure d'un pressuriseur à l'intérieur duquel on réalise le découpage de cannes chauffantes en utilisant des dispositifs suivant l'invention.

La figure 5 est une vue de dessus suivant 5-5 de la figure 4, d'un premier dispositif de découpage suivant l'invention et suivant un premier mode de réalisation, en position de travail à l'intérieur du pressuriseur.

La figure 6 est une vue de dessus suivant 6-6 de la figure 4, d'un dispositif de découpage suivant l'invention et suivant un second mode de réalisation en position de travail à l'intérieur du pressuriseur.

La figure 7 est une demi-vue en coupe par un plan vertical de la partie inférieure d'un pressuriseur montrant les moyens de manutention et de mise en position de service d'un dispositif de découpage suivant l'invention.

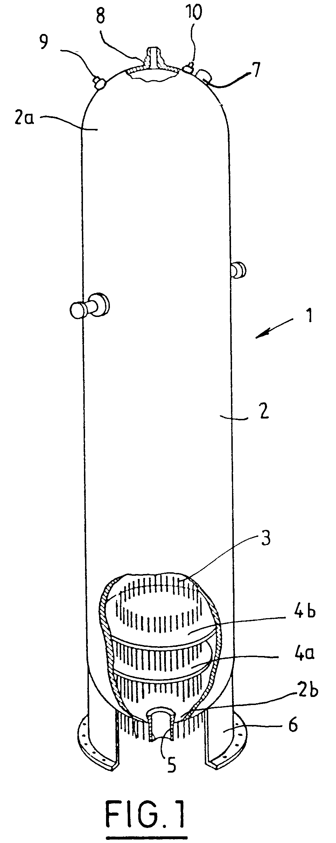

Sur la figure 1, on voit un pressuriseur d'un réacteur nucléaire à eau sous pression désigné de manière générale par le repère 1. Le pressuriseur 1 comporte une enveloppe 2 constituée par une virole cylindrique placée avec son axe vertical et fermée à son extrémité supérieure par un fond bombé 2a et à son extrémité inférieure par un fond bombé 2b. Le fond bombé inférieur 2b est traversé par des cannes chauffantes 3 qui sont maintenues dans une disposition verticale dans la partie inférieure de l'enveloppe 2, par une plaque-entretoise inférieure 4a et par une plaque-entretoise supérieure 4b.

Le fond bombé 2b est également traversé, dans sa partie centrale, par un piquage 5 qui permet de relier le volume intérieur du pressuriseur au circuit primaire du réacteur nucléaire.

Les parties des cannes chauffantes 3 saillantes par rapport au fond bombé inférieur 2b sont disposées à l'intérieur d'une jupe support 6 constituant le prolongement de la virole 2 et permettant la fixation du pressuriseur dans la structure du réacteur nucléaire.

Le fond bombé supérieur 2a de l'enveloppe 2 du pressuriseur est traversé par une ouverture de visite ou trou d'homme 7, un piquage 8 permettant le raccordement de la tuyauterie d'aspersion du pressuriseur et des piquages 9 et 10 permettant le raccordement d'une tuyauterie de détente et le montage d'une soupape de sûreté, respectivement.

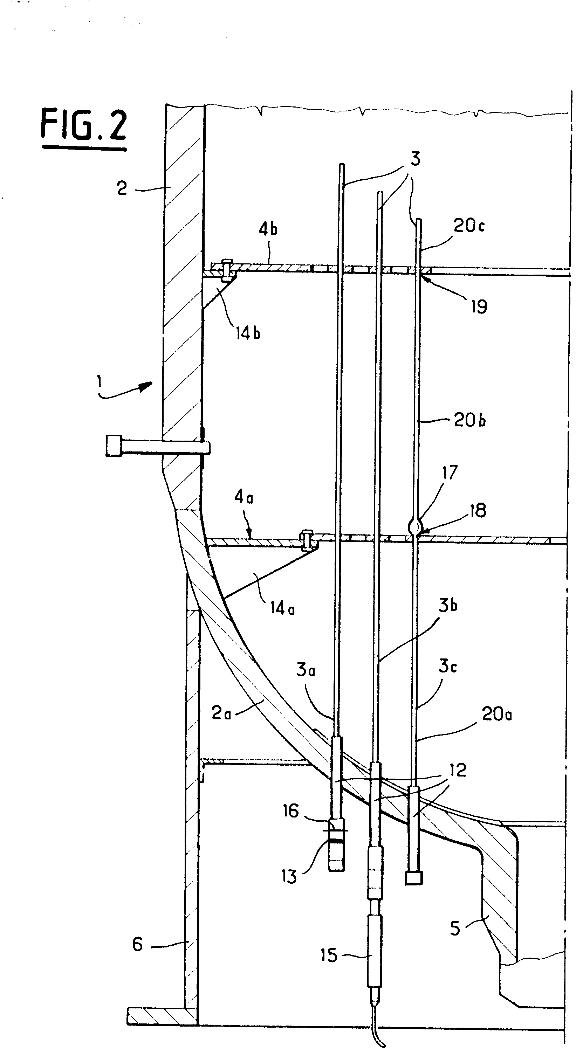

Sur la figure 2, on voit la partie inférieure du pressuriseur 1 dans laquelle sont disposées les cannes chauffantes 3 qui traversent le fond bombé inférieur 2a de l'enveloppe 2 à l'intérieur de manchettes de traversées 12 fixées de manière étanche sur le fond 2a.

Chacune des cannes 3 est reliée à une manchette de raccordement fixée par une soudure 13 sur la manchette de traversée 12 correspondante.

Les cannes chauffantes 3 sont engagées dans des ouvertures traversant les plaques-entretoises inférieure 4a et supérieure 4b permettant de maintenir les cannes 3 dans une disposition verticale.

Les plaques-entretoises 4a et 4b sont fixées à leur périphérie sur des équerres de support 14a et 14b solidaires de la paroi interne de l'enveloppe 2 du pressuriseur.

La plaque 4a en forme de disque présente une ouverture centrale de faible diamètre et un diamètre extérieur sensiblement inférieur au diamètre intérieur de l'enveloppe du pressuriseur, de sorte qu'un espace périphérique de largeur importante est ménagé autour du bord externe de la plaque 4a.

La plaque supérieure 4b comporte une ouverture centrale de grand diamètre et un diamètre extérieur qui n'est que légèrement inférieur au diamètre intérieur de l'enveloppe 2 du pressuriseur, l'espace ménagé autour de la plaque 4b étant de faible largeur.

Les cannes chauffantes sont reliées, à leur extrémité située à l'extérieur de l'enveloppe du pressuriseur, à des moyens d'alimentation en courant électrique des résistances électriques disposées à l'intérieur de l'enveloppe tubulaire de la canne. Un dispositif de raccordement électrique 15 a été représenté sur la partie d'extrémité de la canne 3b représentée sur la figure 2.

La canne 3a a été représentée dans une configuration permettant son extraction et son remplacement. Le dispositif de raccordement électrique 15 est démonté et la manchette est découpée suivant une ligne de coupe 16 située au-dessus du joint de soudure 13.

La canne 3a représentée sur la figure 2 ne comporte pas de déformation, si bien qu'il est possible d'effectuer son extraction en exerçant une traction dans la direction axiale sur l'extrémité de la manchette de raccordement, l'ensemble des opérations nécessaires pour l'extraction étant effectué depuis l'extérieur du générateur de vapeur.

La canne chauffante 3c représentée sur la figure 2 qui présente des déformations et en particulier un renflement 17 au-dessus de la plaque-entretoise inférieure 4a ne peut pas être extraite par simple traction sur son extrémité inférieure située à l'extérieur de l'enveloppe du pressuriseur.

Pour effectuer le remplacement d'une canne déformée telle que la canne 3c, il est nécessaire de mettre en oeuvre le procédé suivant l'invention. Une première découpe de la canne chauffante 3c est réalisée dans une zone 18 située juste au-dessus de la plaque-entretoise 4a et en-dessous du renflement 17.

Une seconde découpe 19 est réalisée juste en-dessous de la plaque-entretoise supérieure 4b. La canne chauffante est ainsi séparée en trois tronçons successifs 20a, 20b et 20c qui peuvent être extraits de l'enveloppe 2 du pressuriseur séparément.

Le tronçon 20a peut être extrait du pressuriseur par l'extérieur de l'enveloppe 2 et par traction sur l'extrémité de la canne 3c située à l'extérieur de l'enveloppe 2.

Les tronçons 20b et 20c sont pris en charge à l'intérieur de l'enveloppe 2 du pressuriseur et extraits par le trou d'homme 7.

Le remplacement de la canne chauffante 3c peut être réalisé en introduisant une canne neuve par l'extérieur du pressuriseur et par son extrémité inférieure, comme dans les procédés de remplacement connus de l'art antérieur.

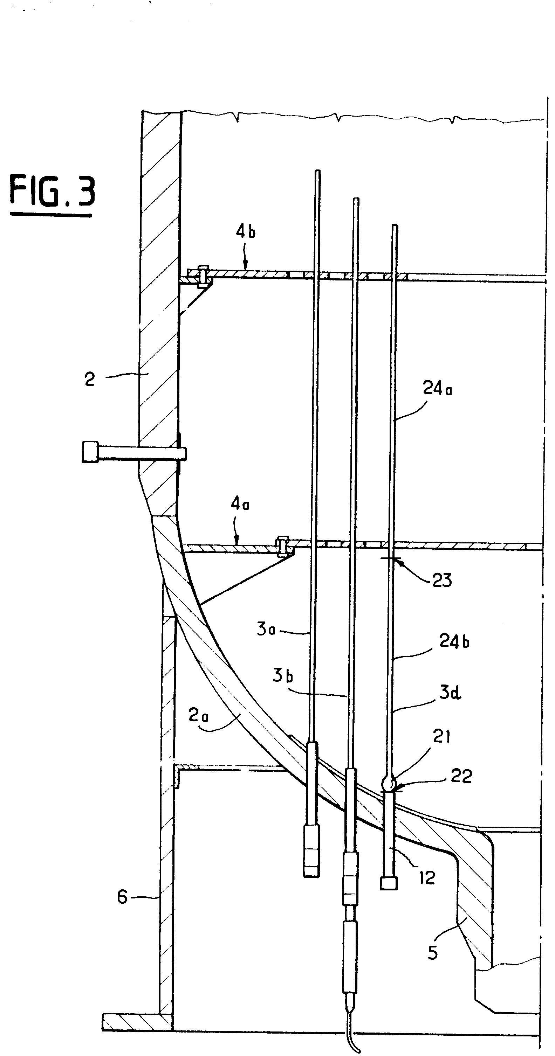

La canne chauffante 3d représentée sur la figure 3 présente une déformation constituée par un renflement 21 situé juste au-dessus de la manchette de traversée 12 correspondante. La présence du renflement 21 interdit une extraction de la canne 3d par découpage de sa manchette de raccordement et par traction sur son extrémité située à l'extérieur de l'enveloppe du pressuriseur. L'extraction de la canne 3d nécessite la mise en oeuvre du procédé suivant l'invention. Une première découpe de la canne 3d est réalisée, à l'intérieur de l'enveloppe du pressuriseur, suivant la ligne de coupe 22, au-dessus de la manchette 12 et en-dessous du renflement 21.

Une seconde découpe est réalisée suivant la ligne de coupe 23 située en-dessous de la plaque-entretoise inférieure 4a.

Le tronçon supérieur 24a du tube 3d et le tronçon inférieur 24b situé au-dessus de la manchette 12 peuvent être extraits de l'enveloppe 2 par le trou d'homme 7.

La partie de la canne chauffante 3d restant dans la manchette 12 peut être extraite de la manchette, par l'extérieur du pressuriseur et par simple traction sur l'extrémité de la canne chauffante saillante par rapport à l'enveloppe du pressuriseur.

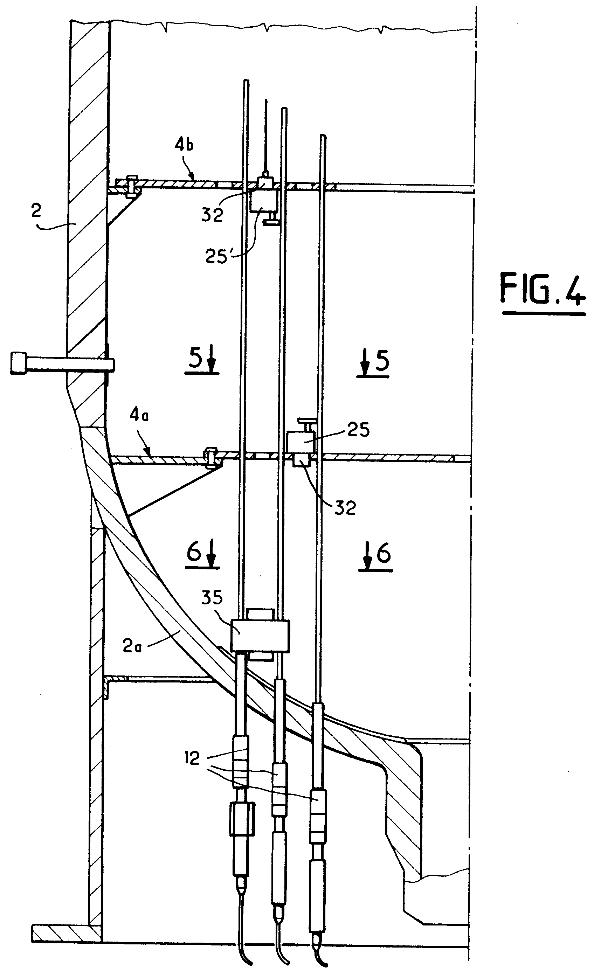

Sur les figures 4, 5, 6 et 7, on a représenté les dispositifs commandés à distance permettant de réaliser le découpage des cannes chauffantes déformées à l'intérieur du pressuriseur et l'extraction des tronçons de canne obtenus après découpage.

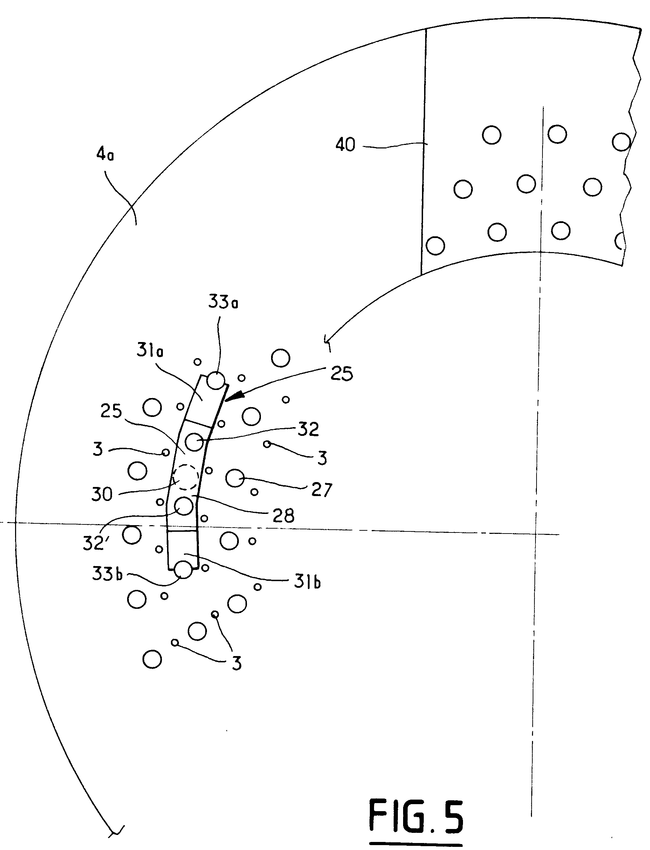

Un premier type de dispositif de découpage est constitué par un robot tel que 25 ou 25' représenté sur les figures 4 et 5 et permettant de réaliser le découpage des cannes chauffantes juste au-dessus ou juste en-dessous des plaques-entretoises 4a et 4b.

Le dispositif 25 permet de réaliser le découpage de cannes chauffantes au-dessus de la plaque-entretoise 4a et le dispositif 25' permet de réaliser le découpage de cannes chauffantes en-dessous de la plaque supérieure 4b.

Les dispositifs 25 et 25' comportent des moyens permettant de comnander à distance leur déplacement entre deux rangées concentriques de cannes chauffantes 3.

Comne il est visible sur la figure 5, les plaques-entretoises, par exemple la plaque-entretoise inférieure 4a en forme de disque, comportent des rangées d'ouvertures concentriques destinées à recevoir chacune une canne chauffante 3. Entre les rangés concentriques d'ouvertures destinées à recevoir les cannes chauffantes, la plaque-entretoise est traversée par des ouvertures de passage d'eau 27 disposées suivant des cercles concentriques et régulièrement espacées dans la direction circonférentielle.

Le dispositif 25 constituant un robot susceptible de se déplacer de manière autonone entre les rangées de tubes comporte une partie centrale 28 constituant le support de la tourelle d'usinage 30 et deux glissières latérales 31a et 31b montées glissantes sur la partie centrale 28 du dispositif 25 et associées à des moyens moteurs comnandés à distance permettant de déplacer les glissières 31a et 31b dans la direction longitudinale des parties d'extrémités de l'élément central 28, ces parties d'extrémité désalignées faisant entre elles un angle peu inférieur à 180°.

L'élément central 28 porte deux doigts de préhension rétractables 32, 32' et chacune des glissières 31a et 31b porte un doigt de préhension rétractable respectivement 33a, 33b. Les doigts de préhension 32, 32' et 33a, 33b peuvent être commandés à distance pour assurer leur introduction et leur serrage dans un trou de passage d'eau 27 ou, au contraire, leur rétraction à l'extérieur d'un trou de passage d'eau 27 dans lequel ils sont engagés et serrés.

Lorsque le dispositif 25 est en prise, par l'intermédiaire des doigts 32 et 32' avec deux ouvertures successives de passage d'eau situées entre deux rangées de cannes chauffantes 3, l'outil de découpage porté par la tourelle de travail 30 est susceptible de réaliser le découpage d'une canne chauffante 3 située dans l'une des rangées entre lesquelles est placé le dispositif de découpage robotisé 25.

Pour déplacer le dispositif 25 en direction d'une canne chauffante à découper située dans l'une des rangées entre lesquelles est placé le dispositif 25, on place les doigts 32 et 32' ainsi que le doigt 33a ou 33b de la glissière 31a ou 31b disposé à l'opposé du sens d'avancement, dans leur position rétractée. On provoque le déplacement d'ensemble de l'élément central 28 et de la glissière dont le doigt est en position rétractée, en commandant le moyen moteur de la glissière dont le doigt est en position de préhension à l'intérieur d'une ouverture de passage d'eau 27. Le déplacement est réalisé avec une amplitude correspondant à l'espace entre deux ouvertures de passage d'eau 27.

Les doigts de préhension disposés à l'arrière de l'ensemble mobile viennent se placer en face de deux ouvertures de passage d'eau 27, par avance d'un pas. Ces doigts sont engagés et serrés dans les ouvertures de passage d'eau correspondantes et le doigt de préhension disposé sur la glissière située à l'avant du dispositif 25 est placé en position rétractée. Cette glissière située à l'avant du dispositif 25 est déplacée d'un pas, de manière que son doigt de préhension vienne en prise à l'intérieur de l'ouverture de passage d'eau suivante, dans le sens de déplacement suivant la ligne de passage d'eau.

Un nouveau pas de déplacement peut être alors réalisé.

Le dispositif 25 peut donc être déplacé par pas successifs suivant la direction circonférentielle de la ligne de passage d'eau 27, entre deux rangées de cannes chauffantes 3. Ce déplacement circonférentiel est rendu possible par l'inclinaison de la direction longitudinale des parties d'extrémité de l'élément central 28.

Le dispositif 25 porte des moyens d'inspection tels qu'une caméra vidéo miniaturisée permettant de retirer les cannes chauffantes 3 présentant des déformations. On peut ainsi contrôler à distance le déplacement et la mise en position de service du dispositif de découpage robotisé 25.

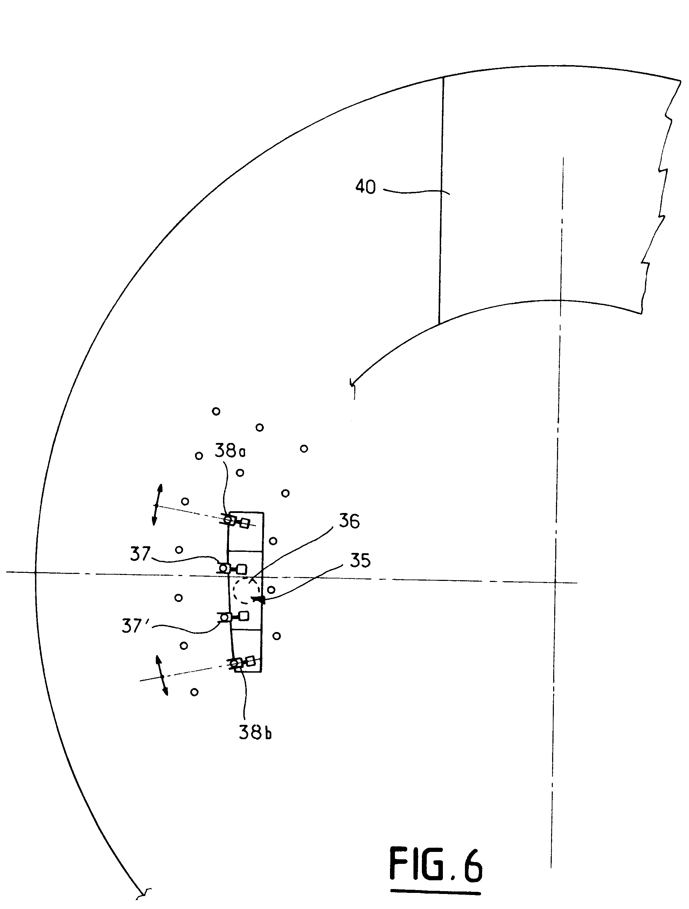

Un dispositif de découpage robotisé d'un second type a été représenté sur les figures 4 et 6. Ce dispositif 35 est susceptible de se déplacer entre les rangées de cannes chauffantes 3, en prenant appui sur les extrémités supérieures des manchettes de traversée 12 et sur les cannes chauffantes.

La structure générale du dispositif 35, comme il est visible sur la figure 6, est sensiblement identique à la structure générale du dispositif 25 qui vient d'être décrite.

Le dispositif 35 comporte un élément central et deux glissières, l'élément central portant une tourelle de travail 36 et deux fourchettes de préhension 37 et 37' et les glissières portant chacune une fourchette de préhension 38a et 38b, respectivement.

Les fourchettes de préhension 37, 37' et 38a, 38b peuvent être commandées à distance pour venir en position de préhension sur les cannes chauffantes 3, juste au-dessus des manchettes 12 qui assurent le support du dispositif de découpage 35.

Les glissières du dispositif 35 sont montées mobiles sur l'élément central et leur déplacement dans la direction longitudinale peut être commandé à distance avec une amplitude correspondant à la distance séparant deux cannes chauffantes 3 situées sur une rangée.

Le déplacement et la mise en position de service du dispositif de découpage 35 peuvent être réalisés de manière analogue à ce qui a été décrit précédemment pour le dispositif 25.

Comme il est visible sur les figures 5 et 6, les cannes chauffantes 3 ne sont pas disposées suivant toute la zone annulaire définie par les plaques-entretoises 4a et 4b.

Une zone 40 vide de cannes chauffantes occupe une certaine longueur dans la direction circonférentielle des plaques 4a et 4b.

La zone 40 sans cannes chauffantes permet de réaliser l'introduction et la mise en place entre deux rangées de cannes chauffantes quelconque des dispositifs de découpage 25 et 35, comme il sera expliqué plus loin.

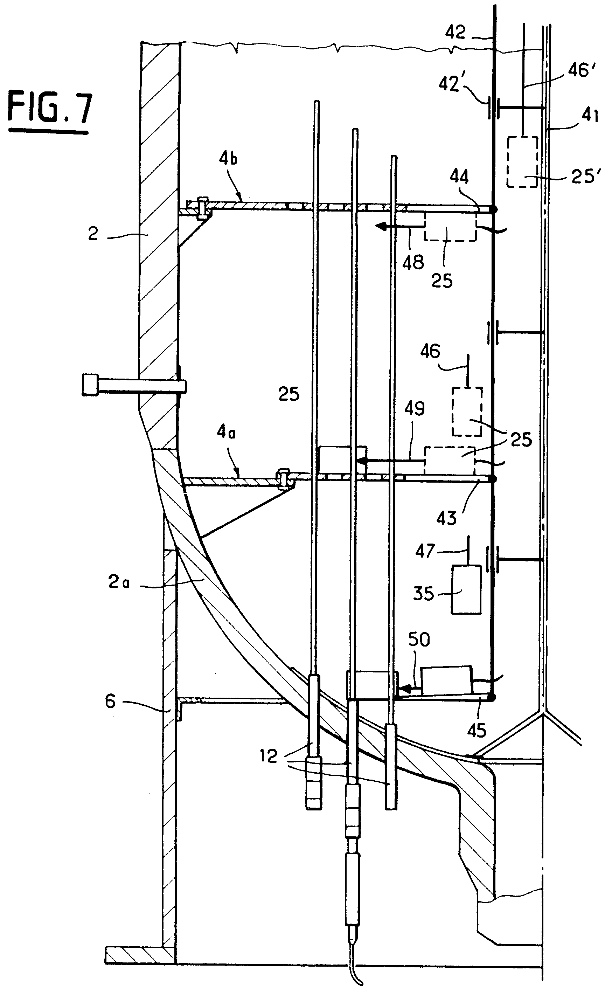

Sur la figure 7, on a représenté l'ensemble des moyens permettant de placer les dispositifs robotisés 25 et 35 à l'entrée d'un passage situé entre deux rangées de cannes 3 du pressuriseur. Ces moyens comportent une charpente verticale 41 reposant sur le fond du pressuriseur sur laquelle est monté rotatif autour d'un axe vertical et dans une disposition transversale, un rail de transfert 42 grâce à des paliers 42'. Les rampes 43 et 44 de support et de guidage des dispositifs 25 et 35 sont montées articulées autour d'un axe horizontal sur le rail 42, au niveau des plaques-entretoises 4a et 4b respectivement.

Les rampes 43 et 44 peuvent être placées par un dispositif commandé à distance, dans une position horizontale où ces rampes se trouvent dans le prolongement des plaques-entretoises 4a et 4b. Les rampes 43 et 44 comportent une rangée d'ouvertures dont la disposition correspond à la position des ouvertures de passage d'eau des plaques-entretoises 4a et 4b produisant ainsi une continuité géométrique.

Le rail 42 porte également une rampe pivotante 45 située au niveau de l'extrémité supérieure des manchettes de traversée 12 des cannes chauffantes. La rampe comportant de fausses cannes chauffantes produit aussi une continuité géométrique.

Les dispositifs de découpage robotisés 25, 25' et 35 peuvent être déplacés dans la direction verticale grâce à un faisceau de câbles de suspension et d'alimentation du mécanisme correspondant relié à un moyen de levage porté par le rail de transfert 42.

Le faisceau de câbles 46 permet de venir placer le mécanisme de découpage robotisé 25 sur la surface supérieure de la rampe 43 ou encore sur la surface inférieure de cette rampe, suivant le niveau où doit se situer l'intervention du dispositif 25.

De la même façon, le faisceau 46' permet de venir placer le dispositif de découpage robotisé 25' sur la surface supérieure ou sur la surface inférieure de la rampe 44. Le faisceau 47 permet de venir placer le dispositif de découpage robotisé 35 sur la surface supérieure de la rampe 45.

La mise en place du dispositif robotisé 25, 25' ou 35 entre deux rangées de cannes chauffantes déterminées est réalisée au niveau de la zone 40 du pressuriseur dans laquelle il n'y a pas de cannes chauffantes.

La mise en place des dispositifs robotisés est assurée par déplacement radial tel que schématisé par les flèches 48, 49 et 50.

Le déplacement radial des mécanismes robotisés pour leur mise en place à l'intérieur de l'espace 40 peut être assuré par les moyens de déplacement de ces mécanismes à l'intérieur des rangées de cannes.

Dans ce cas, il est nécessaire de faire effectuer une rotation de 90° au mécanisme de découpage robotisé afin de le placer dans l'alignement d'un espace circonférentiel entre deux rangées de cannes chauffantes.

Il est également possible de placer le mécanisme robotisé dans sa position circonférentielle sur la rampe correspondante dans le cas où ce dispositif robotisé comporte des moyens de déplacement dans deux directions perpendiculaires.

Une surveillance par caméra vidéo permet de repérer les rangées de cannes chauffantes entre lesquelles doit être introduit le mécanisme de découpage.

Les mécanismes de découpage robotisés comportent, en plus de leur tourelle de travail, un moyen de préhension des cannes chauffantes, ce qui permet de réaliser l'extraction des tronçons de cannes chauffantes après découpage en utilisant les moyens de manutention et de levage des mécanismes robotisés.

L'introduction des mécanismes robotisés à l'intérieur du pressuriseur est réalisée par les ouvertures centrales des plaques-entretoises. Pour réaliser cette introduction et cette mise en place des dispositifs robotisés, il peut être nécessaire de réaléser la plaque-entretoise inférieure.

La mise en place des dispositifs robotisés et l'extraction des tronçons de cannes chauffantes pourraient être également réalisées par passage dans l'espace libre situé à la périphérie des plaques-entretoises.

Dans tous les cas, le procédé et le dispositif suivant l'invention permettent de réaliser l'extraction de cannes chauffantes présentant des déformations au niveau des plaques-entretoises ou au-dessus des manchettes de traversée de ces cannes. Cette extraction est réalisée à distance et ne nécessite aucune intervention manuelle à l'intérieur de l'enveloppe du pressuriseur, ce qui évite d'exposer des opérateurs à un milieu irradié.

L'invention ne se limite pas aux modes de réalisation qui ont été décrits.

C'est ainsi qu'on peut réaliser le découpage des cannes chauffantes à l'intérieur de l'enveloppe du pressuriseur en utilisant des mécanismes de découpage commandés à distance différents des mécanismes décrits. Ces mécanismes peuvent comporter des moyens de déplacement entre les rangées de cannes chauffantes différents de ceux qui ont été décrits.

De même, les moyens de mise en place des mécanismes robotisés peuvent etre différents de ceux qui ont été décrits.

Le procédé suivant l'invention peut également être mis en oeuvre en utilisant des séquences de découpage et d'extraction de tronçons des cannes chauffantes différentes de celles qui ont été décrites.

## Revendications

**1.** - Procédé d'extraction d'une canne chauffante (3) présentant des déformations, d'une enveloppe (2) de pressuriseur d'un réacteur nucléaire à eau sous pression ayant un axe de symétrie, dans laquelle les cannes chauffantes (3) sont maintenues dans une disposition axiale par des plaques-entretoises (4a, 4b) et traversent un fond (2a) de l'enveloppe (2) à l'intérieur de manchettes (12), caractérisé par le fait que la canne chauffante (3c, 3d) est découpée à l'intérieur de l'enveloppe du pressuriseur, dans au moins une zone, par une opération de découpage commandée à distance et qu'au moins un tronçon de la canne (3c, 3d) est extrait par une ouverture de visite (7) de l'enveloppe (2).

**2.-** Procédé d'extraction suivant la revendication 1, caractérisé par le fait que la canne chauffante (3c) est découpée au voisinage d'au moins une plaque-entretoise (4a, 4b).

**3.-** Procédé d'extraction suivant la revendication 1, caractérisé par le fait que la canne chauffante est découpée au voisinage de l'extrémité d'une manchette de traversée (12) située à l'intérieur de l'enveloppe (2) du pressuriseur (1).

**4.-** Procédé d'extraction suivant l'une quelconque des revendications 1, 2 et 3, caractérisé par le fait qu'au moins un tronçon de la canne chauffante (3c, 3d) est extrait par l'extérieur de l'enveloppe (2) du pressuriseur (1), par traction sur son extrémité située à l'extérieur de la manchette de traversée (12) correspondante.

**5.-** Dispositif d'extraction d'une canne chauffante (3) présentant des déformations, d'une enveloppe (2) d'un pressuriseur (1) d'un réacteur nucléaire à eau sous pression ayant un axe de symétrie dans laquelle les cannes chauffantes (3) sont maintenues dans une disposition axiale par des plaques-entretoises (4a, 4b) et traversent le fond de l'enveloppe (2) à l'intérieur de manchettes (12), caractérisé par le fait qu'il comporte au moins un mécanisme de découpage (25, 25', 35) commandé à distance comportant un moyen (30) de découpage et des moyens (31a, 31b, 33a, 33b) de déplacement du dispositif entre deux rangées concentriques de cannes chauffantes (3).

6.- Dispositif suivant la revendication 5, caractérisé par le fait que le dispositif (25, 25') comporte un élément central (28) et au moins une glissière d'extrémité (31a, 31b) mobile en translation par rapport à l'élément central (28) associée à des moyens moteurs de déplacement en translation et des doigts de préhension rétractables commandables à distance portés par l'élément central (28) et chacune des glissières (31a, 31b) susceptibles de s'engager et d'être serrés dans des ouvertures de passage d'eau (27) traversant les plaques-entretoises (4a, 4b) et disposées de manière équidistante entre des rangées de cannes chauffantes concentriques (3) maintenues en position par les plaques-entretoises (4a, 4b).

7.- Dispositif suivant la revendication 5, caractérisé par le fait qu'il comporte un élément central et au moins une glissière d'extrémité montée mobile en translation par rapport à l'élément central associée à des moyens de déplacement en translation commandés à distance et des fourchettes de préhension rétractables (37, 37', 38a, 38b) commandables à distance, portées par l'élément central et les glissières susceptibles de venir en prise avec les cannes chauffantes successives (3) d'une rangée circulaire de cannes chauffantes, immédiatement au-dessus des manchettes de traversée (12) des cannes chauffantes (3).

8. - Dispositif suivant l'une quelconque des revendications 5, 6 et 7, caractérisé par le fait qu'il comporte de plus des moyens de levage et de mise en place d'au moins un mécanisme de découpage commandé à distance (25, 25', 35), à l'extrémité d'un espace situé entre deux rangées de cannes chauffantes concentriques (3).

9.- Dispositif suivant la revendication 8, caractérisé par le fait que les moyens de manutention du mécanisme de découpage commandé à distance (25, 25', 35) comportent une charpente (41) fixée dans une disposition axiale à l'intérieur de l'enveloppe (2) du preseuriseur, un rail de transfert (42) monté rotatif autour d'un axe de direction axiale, dans une disposition transvereale par rapport à la charpente (41), au moine une rampe de support et de guidage (43, 44, 45) d'au moins un mécanisme de découpage conmandé à distance (25, 25', 35) montée pivotante sur le rail de transfert (42) et des moyens (46, 46', 47) de mise en place d'au moins un mécanisme de découpage (25, 25', 35) sur une rampe de support et de guidage (43, 44, 45).

# FIG.1

FIG.2

FIG.3

FIG.4

# FIG. 5

**FIG.6**

FIG.7

EP 0 475 799 A1

Office européen des brevets

**RAPPORT DE RECHERCHE EUROPEENNE**

Numero de la demande

EP 91 40 2181

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 329 057 (WESTINGHOUSE)<br>* Page 3, ligne 17 - page 4, ligne 30; figures 1,2 *<br>--- | 1,5 | G 21 C 1/09<br>F 22 B 37/00 |
| A | US-A-4 018 346 (A. LESHEM)<br>* Abrégé; figures 1,3 *<br>--- | 5,6 | |
| A | EP-A-0 084 867 (KWU)<br>* Page 6, ligne 24 - page 7, ligne 10; figures 1-4 *<br>----- | 5,7 | |

**DOMAINES TECHNIQUES RECHERCHES (Int. Cl.5)**

G 21 C
F 22 B

Le présent rapport a été établi pour toutes les revendications

| Lieu de la recherche | Date d'achèvement de la recherche | Examinateur |
|---|---|---|
| LA HAYE | 11-11-1991 | JANDL F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

16